# EUROPEAN PATENT APPLICATION

(11) **EP 1 953 026 A1**
(43) Date of publication of application: **06.08.2008**
(21) Application number: 08101072.0
(22) Date of filing: 29.01.2008
(51) Int. Cl.: B60K 17/16

(54) **Power transfer system for four-wheel drive vehicles**

(30) Priority: 31.01.2007 JP 2007020418
(71) Applicant: Fuji Jukogyo Kabushiki Kaisha, Tokyo 160-8316 (JP)
(72) Inventor: Hirase, Hiromi, Tokyo 160-8316 (JP)
(74) Representative: Sajda, Wolf E.

(57) **Abstract**

A power transfer system for four-wheel drive vehicles is provided which allows the power transmission system to be compact and the front differential (31) to be located near the lateral center of the vehicle body (Y/O) even when an unmodified FR vehicle transmission (32) is used. The amount of offset by which a pinion shaft (31b) of the front differential (31) is offset from the lateral center of the vehicle body (Y/O) toward a drive pinion shaft (36) is defined such that right and left drive shafts (14, 42) coupled to the front differential (31) can be considered generally equal in length to each other. Furthermore, a differential case (31a) near the pinion shaft (31b) is extended toward the drive pinion shaft (36) where the outer diameter thereof is maintained, and a hypoid drive gear (31e) is attached to the extended portion.

## Description

### BACKGROUND OF THE INVENTION

The present invention relates to a power transfer system for four-wheel drive vehicles.

Conventionally, a power transfer system is known which is arranged longitudinally in a four-wheel drive vehicle and which includes a torque converter, a transmission, a transfer unit (or center differential), and a front differential (hereinafter referred to as the front differential) in one dividable case (e.g., see Japanese Patent Application Laid-Open No. Hei 5-201264).

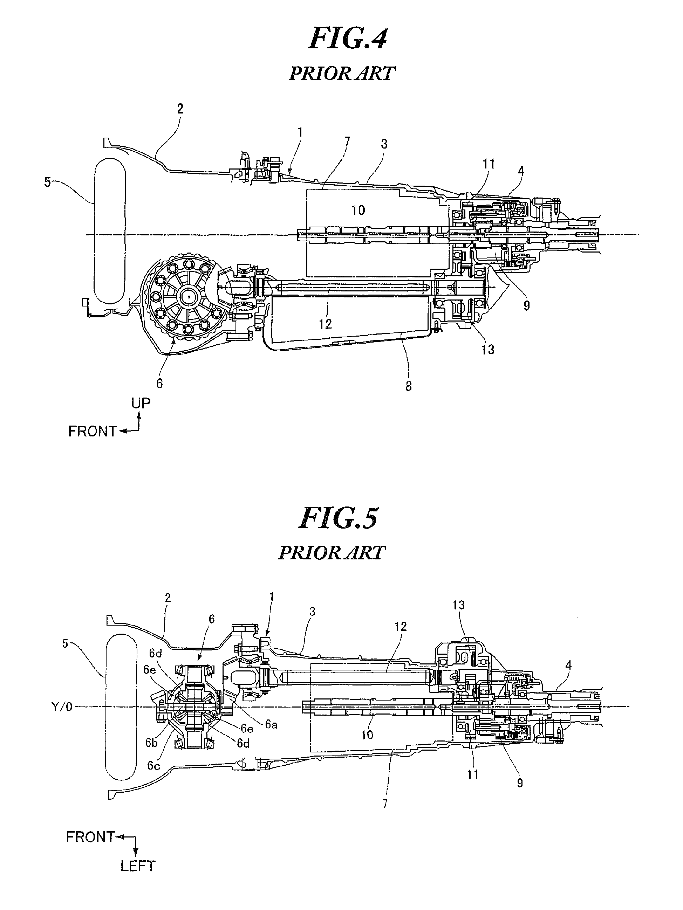

As shown in Figs. 4 and 5, in this type of a power transfer system for four-wheel drive vehicles, a case 1 is configured to have a torque converter case 2, a transmission case 3, and an extension case 4, which are coupled to each other in the longitudinal direction. The torque converter case 2 accommodates a torque converter 5 and a front differential 6. The transmission case 3 accommodates an automatic transmission mechanism section 7 and a control valve 8 of the transmission. The extension case 4 accommodates a transfer unit 9.

Engine power transmitted through the torque converter 5 and the automatic transmission mechanism section 7 is supplied via a reduction drive shaft 10 to the transfer unit 9, where the engine power is divided to drive the front wheels and the rear wheels. The engine power for driving the rear wheels is transmitted to the rear differential via a propeller shaft (not shown), which extends rearward from the extension case 4, to rotate the right and left rear wheels via the right and left drive shafts, respectively.

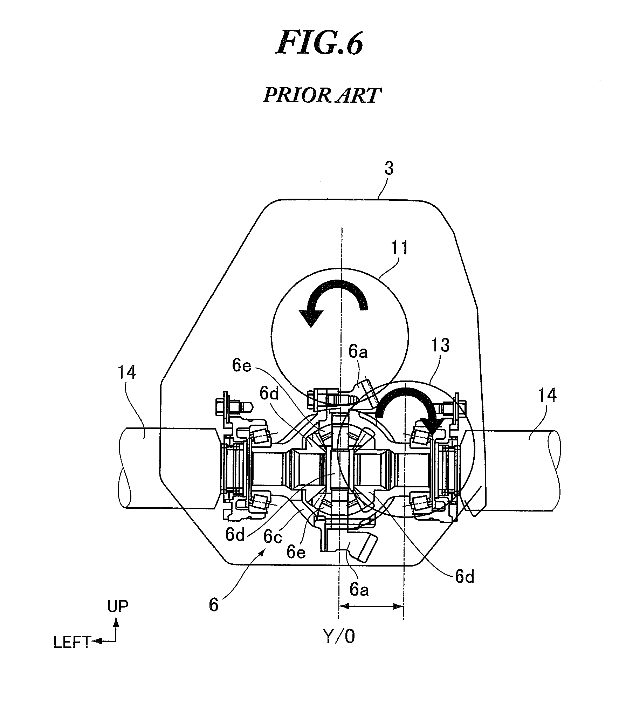

On the other hand, the engine power for driving the front wheels serves to rotationally drive a drive pinion shaft 12, which is disposed in parallel to and diagonally below the reduction drive shaft 10, via a reduction drive gear 11 and a reduction driven gear 13. In this instance, the reduction drive gear 11 is relatively rotatably disposed on the shaft of the reduction drive shaft 10, and the reduction driven gear 13 is secured to the shaft of the drive pinion shaft 12. The engine power is thus transferred to the front differential 6 engaged with the drive pinion shaft 12, thereby rotating the right and left front wheels via right and left drive shafts 14 (illustrated in Fig. 6), respectively.

As shown in Figs. 5 and 6, a hypoid gear 6a of the front differential 6 is securely attached to a differential case 6c near a pinion shaft 6b which serves as a differential center. This is due to the following reasons. The pinion shaft 6b has, on both ends of the shaft, a pair of differential bevel pinions 6e which rotate in the longitudinal direction about the lateral center of the vehicle body Y/0. The differential bevel pinions 6e also mate with a pair of right and left differential bevel gears 6d which are disposed on the right and left sides of the shaft, respectively. This arrangement allows the differential case 6c near the pinion shaft 6b to have the maximum outer diameter. This configuration is thus preferable in terms of power transmission.

Furthermore, the pinion shaft 6b is located on the lateral center of the vehicle body Y/0, so that the right and left drive shafts 14 spline-engaged with the differential bevel gears 6d are equal in length to each other. This configuration is intended to prevent torque steer (being a phenomenon in which the steering wheel is turned in one direction during an abrupt start of the vehicle) and provide a large steering angle or suspension stroke.

However, in the aforementioned conventional power transfer system for four-wheel drive vehicles, the drive pinion shaft 12 is contained in the transmission case 3. For this reason, most parts of the transmission need to be custom designed and manufactured at additional cost and with consequently low versatility.

In this context, a power transfer system for four-wheel drive vehicles may be conceived which allows a front-engine rear-drive (FR) vehicle transmission to be employed with no change made thereto, so that part of the engine power is drawn out of the case in back of the transmission and then transferred to the front differential via a drive pinion shaft disposed externally.

However, in such a case, using a front differential configured in the conventional manner would require it to be significantly offset laterally from the lateral center of the vehicle body Y/0, depending on the amount of offset of the external drive pinion shaft. This would in turn cause not only the power transmission system to be increased in size but also the right and left drive shafts to be unequal in length, resulting in the torque steer being produced or in the steering angle and suspension stroke being reduced.

### SUMMARY OF THE INVENTION

The present invention was developed in view of the aforementioned problems with the conventional technique. It is therefore an object of the present invention to provide a power transfer system for four-wheel drive vehicles which allows the power transmission system to be compact and the front differential to be located near the lateral center of the vehicle body Y/0 even when an unmodified FR vehicle transmission is used.

In order to achieve the aforementioned object, a first aspect of the present invention provides a power transfer system for four-wheel drive vehicles which is longitudinally disposed and includes a single dividable case, a front differential and a transmission which are accommodated in the dividable case. The power transfer system is configured to draw part of engine power out of the case in back of the transmission, to then be transferred to the front differential via a drive pinion shaft disposed externally.

The front differential is configured such that a pinion shaft disposed to serve as a differential center within a differential case is offset a predetermined distance from a lateral center of a vehicle body toward the drive pinion shaft. An extended portion is also provided which is formed by extending the differential case near the pinion shaft toward the drive pinion shaft, where the outer diameter of the differential case near the pinion shaft is maintained. A hypoid drive gear mating with the drive pinion shaft is attached to the extended portion.

In order to achieve the aforementioned object, a second aspect of the present invention is characterized in that the predetermined distance is defined such that right and left drive shafts coupled to the front differential can be considered generally equal in length to each other.

According to the first and second aspects of the present invention, the pinion shaft of the front differential is offset a predetermined distance from the lateral center of the vehicle body toward the drive pinion shaft. The differential case near the pinion shaft is extended toward the drive pinion shaft, where the outer diameter of the differential case near the pinion shaft is maintained, to attach the hypoid drive gear to the extended portion. This allows for forming a longitudinal power transfer system for four-wheel drive vehicles using an FR vehicle transmission without an increase in the size of the front differential and the torque converter case. The front differential can also be disposed near the lateral center of the vehicle body. Furthermore, the offset position of the pinion shaft is defined such that the right and left drive shafts coupled to the front differential can be considered generally equal in length to each other. Thus, torque steer will not occur and the steering angle or suspension stroke is not reduced.

According to the power transfer system for four-wheel drive vehicles of the present invention, the pinion shaft of the front differential is offset a predetermined distance from the lateral center of the vehicle body toward the drive pinion shaft. The amount of offset is defined such that the right and left drive shafts coupled to the front differential can be considered generally equal in length to each other.

Furthermore, the differential case near the pinion shaft is extended toward the drive pinion shaft where the outer diameter of the differential case near the pinion shaft is maintained to attach the hypoid drive gear to the extended portion. This allows for making the power transmission system to be compact even when an unmodified FR vehicle transmission is used. The front differential can also be disposed near the lateral center of the vehicle body.

### BRIEF DESCRIPTION OF THE DRAWINGS

These and other objects and advantages of the present invention will become clear from the following description with reference to the accompanying drawings, wherein:
- Fig. 1: is an explanatory schematic side view illustrating the internal configuration of a power transfer system for four-wheel drive vehicles to which the present invention is applied;
- Fig. 2: is a plan view of the embodiment in Fig. 1;
- Fig. 3: is a schematic view of the same example when viewed frontwards from the back of a transmission case to a front differential;
- Fig. 4: is an explanatory schematic side view illustrating the internal configuration of a conventional power transfer system for four-wheel drive vehicles;
- Fig. 5: is a plan view of the conventional system in Fig. 4; and
- Fig. 6: is a schematic view of the same example when viewed frontwards from the back of a transmission case to the front differential shown in Fig. 4.

### DETAILED DESCRIPTION OF THE PREFERRED EMBODIMENTS

Now, the present invention will be described below in more detail with reference to the accompanying drawings in accordance with the embodiment.

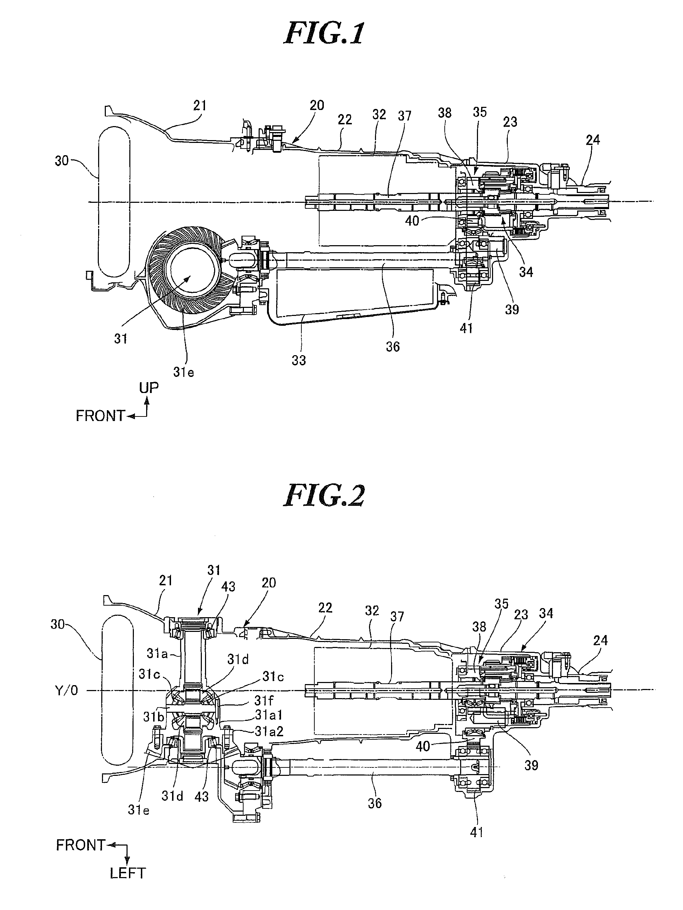

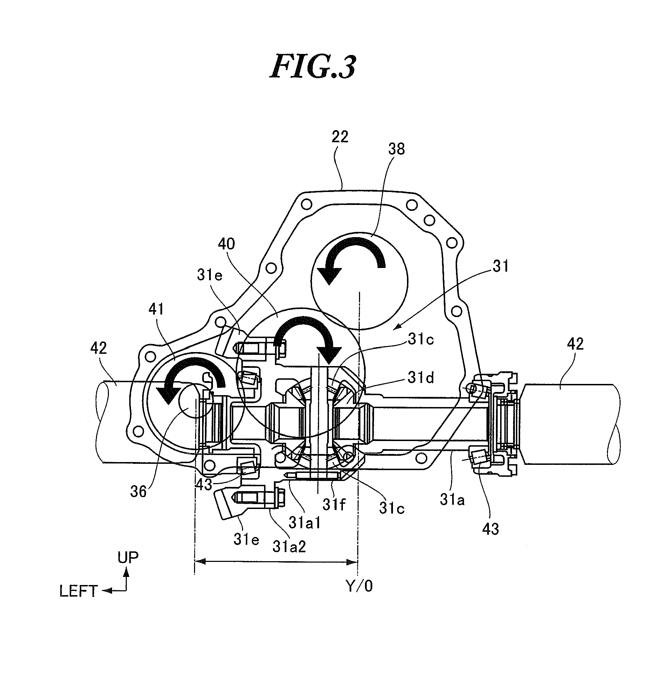

Fig. 1 is an explanatory schematic side view illustrating the internal configuration of a power transfer system for four-wheel drive vehicles to which the present invention is applied. Fig. 2 is a plan view of Fig. 1. Fig. 3 is a schematic view of the same example when viewed frontwards from the back of a transmission case to a front differential.

The present invention is applied to a longitudinally disposed power transfer system for four-wheel drive vehicles which includes a front differential and a transmission in a single dividable case. The power transfer system is configured such that part of engine power is drawn out of the case in back of the transmission and then transmitted to the front differential via a drive pinion shaft disposed externally.

As shown in Figs. 1 to 3, the power transfer system for four-wheel drive vehicles of the present invention includes, in a single dividable case 20, a torque converter 30, a front differential 31, an automatic transmission mechanism section 32 and a control valve 33 of a transmission, a transfer unit (center differential) 34, and a reduction unit 35. The transfer unit 34 following the transmission draws part of engine power out of the case to be transmitted to the front differential 31 via a drive pinion shaft 36 disposed externally.

Note that the present embodiment employs, as the transmission, an unmodified longitudinal FR vehicle transmission including its case.

More specifically, the case 20 includes a torque converter case 21, a transmission case 22, a reduction case 23, and an extension case 24, which are coupled to each other in the longitudinal direction. The torque converter case 21 accommodates the torque converter 30 and the front differential 31. The transmission case 22 accommodates the automatic transmission mechanism section 32 and the control valve 33. The reduction case 23 and the extension case 24 accommodate the transfer unit 34 and the reduction unit 35.

Engine power through the torque converter 30 and the automatic transmission mechanism section 32 is transmitted via a reduction drive shaft 37 to the transfer unit 34, where the power is divided to drive front wheels and rear wheels. The engine power for driving the rear wheels is transmitted to a rear differential via a propeller shaft (not shown), which extends rearward from the extension case 24, to rotate the right and left rear wheels via the right and left drive shafts, respectively.

Conversely, the engine power for driving the front wheels is drawn out of the case by the reduction unit 35. The reduction unit 35 is compact in size and includes three gears which mate with each other. The reduction unit 35 is configured to transmit engine power from a reduction drive gear 38 via a reduction counter gear 40 to a reduction driven gear 41, thereby rotationally driving the drive pinion shaft 36. In this instance, the reduction drive gear 38 is relatively rotatably disposed on the rear portion of the reduction drive shaft 37.

The reduction counter gear 40 is supported by an intermediate shaft 39 located diagonally thereunder on the left. The reduction driven gear 41 is secured to the rear portion of the drive pinion shaft 36. The drive pinion shaft 36 is located outside the transmission case 22 at a predetermined distance therefrom. This allows transmission of engine power to the front differential 31 mating with the drive pinion shaft 36, thereby rotating the right and left front wheels via the right and left drive shafts 42.

Note that the drive pinion shaft 36 is covered with a protective cover (not shown) which is fixed across the torque converter case 21 and the reduction case 23. Note also that the reduction unit 35 is not limited to the configuration of a group of gears but may also include chains, for example.

As shown in Figs. 2 and 3, the front differential 31 is configured to include a differential case 31a, a pinion shaft 31 b, a pair of differential bevel pinions 31 c, a pair of differential bevel gears 31d, and a hypoid gear 31e.

The differential case 31a, which is hollow, accommodates the pinion shaft 31 b which is secured to the differential case 31a with a straight pin 31f to prevent it from being dislodged. The pinion shaft 31b is provided, on both ends of the shaft, with the pair of rotatable differential bevel pinions 31 c. Furthermore, the differential bevel gears 31d are rotatably disposed to the right and left across the pinion shaft 31 b. The differential bevel gears 31d mate with the pair of differential bevel pinions 31c and are spline-engaged with the right and left drive shafts 42, so that the pinion shaft 31b serves as the differential center of the front differential 31.

Furthermore, with the differential case 31a rotatably supported on the torque converter case 21 via right and left tapered roller bearings 43, the pinion shaft 31b is offset a predetermined distance from the lateral center of the vehicle body Y/0 toward the drive pinion shaft. The amount of offset is defined such that the right and left drive shafts 42 coupled to the differential bevel gears 31d can be considered generally equal to each other in length.

Furthermore, the differential case 31a near the pinion shaft is increased in diameter so as to be greater in outer diameter than the right and left case portions into which the drive shafts 42 are respectively inserted, and is integrated with an extended portion 31a1 which extends a predetermined distance toward the drive pinion shaft with the outer diameter maintained unchanged. Compared with having the pinion shaft 31b placed on the lateral center of the vehicle body Y/0, having the pinion shaft 31b offset leftward from the lateral center of the vehicle body Y/0 provides a minimum required distance over which the extended portion 31a1 is extended, thereby preventing an increase in the size of the front differential 31.

Furthermore, the extended portion 31a1 has a protruding outer circumference portion, with which a flange portion 31 a2 is integrated to attach a hypoid drive gear 31e thereto so that it mates with the drive pinion shaft 36. With the hypoid drive gear 31e attached to the flange portion 31 a2, the toothed surface of the hypoid drive gear 31e is disposed in close proximity to the left inner wall of the torque converter case 21.

As described above, according to the power transfer system for four-wheel drive vehicles of the present invention, the pinion shaft 31b of the front differential 31 is offset a predetermined distance from the lateral center of the vehicle body Y/0 toward the drive pinion shaft 36. In addition, the differential case 31a near the pinion shaft 31b is extended toward the drive pinion shaft 36 where the outer diameter of the differential case 31a near the pinion shaft 31 bis maintained, and the hypoid drive gear 31e is attached to the extended portion 31a1.

Thus, without increase in the size of the front differential 31 and the torque converter case 21, this arrangement makes it possible to use an unmodified FR vehicle transmission including a case to form a longitudinal power transfer system for a four-wheel drive vehicle. Furthermore, the pinion shaft 31b is offset to such an offset position that allows for considering the right and left drive shafts 42 coupled to the front differential 31 to be generally equal to each other in length. Thus, torque steer never occurs with the steering angle or suspension stroke never reduced.

Note that the present embodiment employs, as the transmission, an automatic transmission. However, the present invention is not limited thereto. The invention may also employ an FR vehicle manual transmission. To employ the FR vehicle manual transmission, it is necessary to form a transmission case integrated with a clutch housing to contain the front differential. However, since the clutch and the manual transmission mechanism for the FR vehicle can also be used with no change made thereto, the power transfer system for four-wheel drive vehicles can be provided at low costs.

## Claims

1. A power transfer system for four-wheel drive vehicles which is longitudinally disposed and includes a single dividable case (20), a front differential (31) and a transmission (32) which are accommodated in the dividable case (20), the power transfer system being configured to draw part of engine power out of the case in back of the transmission (32), to then be transferred to the front differential (31) via a drive pinion shaft (36) disposed externally,
wherein the front differential (31) is configured such that a pinion shaft (31b) disposed to serve as a differential center within a differential case (31a) is offset a predetermined distance from a lateral center of a vehicle body (Y/O) toward the drive pinion shaft (36), an extended portion (31a1) is provided which is formed by extending the differential case (31a) near the pinion shaft (31b) toward the drive pinion shaft (36), where the outer diameter of the differential case (31a) near the pinion shaft (31b) is maintained, and a hypoid drive gear (31e) mating with the drive pinion shaft (36) is attached to the extended portion (31a1).

2. The power transfer system according to claim 1,
wherein the predetermined distance is defined such that right and left drive shafts (14, 42) coupled to the front differential (31) can be considered generally equal in length to each other.
